# EUROPÄISCHE PATENTSCHRIFT

(11) **EP 3 284 349 B1**
(45) Veröffentlichungstag und Bekanntmachung des Hinweises auf die Patenterteilung: **27.02.2019**
(21) Anmeldenummer: 16184961.7
(22) Anmeldetag: 19.08.2016
(51) Int. Cl.: A23L 2/10, A23L 2/46, B01D 1/00, B01D 1/26

(54) **ANLAGE ZUM KONZENTRIEREN VON FLÜSSIGEN PRODUKTEN**
DEVICE FOR CONCENTRATING LIQUID PRODUCTS
INSTALLATION DESTINE A CONCENTRER DES PRODUITS LIQUIDES

(43) Veröffentlichungstag der Anmeldung: 21.02.2018
(73) Patentinhaber: GEA Wiegand GmbH, 76275 Ettlingen (DE)
(72) Erfinder: PRASCHAK, Herbert, 99423 Weimar (DE); STOESSEL, Kai, 76287 Rheinstetten (DE)
(74) Vertreter: Weickmann & Weickmann PartmbB

(56) Entgegenhaltungen:
- DE-A1- 3 443 055
- DE-A1-102012 203 439
- FR-A- 1 308 700
- FR-A1- 2 570 285

## Beschreibung

Die vorliegende Erfindung betrifft eine Anlage zum Konzentrieren eines flüssigen, einen vorbestimmten Stoff, beispielsweise Zucker, enthaltenden Produkts, insbesondere Fruchtsaft, beispielsweise Apfelsaft, umfassend zwei in Reihe angeordnete Verdampferanordnungen, wobei die erste Verdampferanordnung dazu eingerichtet ist, das flüssige Produkt auf eine vorbestimmte erste Konzentration des vorbestimmten Stoffs aufzukonzentrieren, die zweite Verdampferanordnung dazu eingerichtet ist, das flüssige Produkt anschließend auf eine vorbestimmte Endkonzentration des vorbestimmten Stoffs aufzukonzentrieren, und wenigstens die erste Verdampferanordnung eine Mehrzahl von Verdampferstufen umfasst, zwei Beheizungseinrichtungen, von denen eine zur Beheizung der ersten Verdampferanordnung vorgesehen ist, während die andere zur Beheizung der zweiten Verdampferanordnung vorgesehen ist, wobei lediglich die erste Beheizungseinrichtung einen mechanischen Brüdenverdichter umfasst, und wenigstens eine Filter- und/oder Klärvorrichtung.
Um Anlagen zum Konzentrieren von flüssigen Produkten und insbesondere Eindampfanlagen für Fruchtsäfte wirtschaftlich betreiben zu können, sind sie in der Regel mehrstufig ausgebildet und umfassen wenigstens zwei in Reihe geschaltete Verdampferanordnungen, von denen die erste das Ausgangsprodukt auf eine vorbestimmte erste Konzentration vorkonzentriert und die zweite das vorkonzentrierte Produkt bis zu einer vorbestimmten Endkonzentration weiter aufkonzentriert. Hierbei umfassen die Verdampferanordnungen in der Regel wiederum mehrere Verdampferstufen. Beheizt werden die Verdampferanordnungen in bekannten Anlagen entweder mittels einer Direktdampfheizung, mittels eines thermischen Brüdenverdichters oder mittels eines mechanischen Brüdenverdichters. So beschreibt DE3443055 eine Anordnung zum Eindampfen von Fruchtsäften, wobei der Saft mehrere Verdampfer hintereinander durchläuft und dazwischen geklärt wird. Insbesondere zum Konzentrieren von Fruchtsäften werden Anlagen der oben genannten Gattung häufig eingesetzt, wobei hierbei gerade die Beheizung mit Frischdampf oder mit einem thermischem Brüdenverdichter sehr verbreitet ist. Demhingegen sind Anlagen, die mit einem mechanischen Brüdenverdichter ausgerüstet sind bzw. beheizt werden, nur sehr selten zu finden, wenngleich eine mechanische Brüdenverdichtung an sich energetisch günstiger und damit verglichen mit einer thermischen Brüdenverdichtung oder gar einer Direktdampfheizung wirtschaftlicher ist. Der Verzicht auf mechanische Brüdenverdichter hat verschiedene Gründe, die im Folgenden angesprochen werden, wobei bei sämtlichen Kostenüberlegungen zur Anschaffung und dem Betrieb einer solchen Anlage stets zu beachten ist, dass die Anlage in der Regel Laufzeiten von nur wenigen Monaten pro Jahr haben wird, da ihr Betrieb saisonbedingt mit der Ernte der entsprechenden Früchte korreliert ist.

Gegen den Einsatz eines mechanischen Brüdenverdichters in herkömmlichen Anlagen spricht einerseits, dass die Investitionskosten beim Aufbau der Anlage zunächst relativ hoch sind, und andererseits auch festgestellt worden ist, dass der hohe Siedepunktverzug des beim Konzentrieren von Fruchtsäften entstehenden zuckerhaltigen Konzentrats einen wirtschaftlichen Einsatz von mechanischer Brüdenverdichtung bis zur angestrebten Enddichte des Fruchtsaftkonzentrats unmöglich macht.

Ferner ist es prozessbedingt bei Säften, und hierbei insbesondere bei Apfelsaft, immer nötig, auch eine Klärung bzw. Filtration des Trubsafts vorzunehmen. Anschließend wird dann der hiernach vorliegende Klarsaft bis zur Enddichte eingedampft. In der Regel ist hierzu so vorgegangen worden, dass der Trubsaft bis zu einer Dichte von etwa 20° Brix vorkonzentriert worden ist, da dieser Wert eine Konzentration darstellt, bei der die Filtration vom Trubsaft zum Klarsaft optimal durchzuführen ist. Die Brix-Skala setzt hierbei die Dichte von beliebigen Flüssigkeiten mit der Dichte einer Lösung von Saccharose in Wasser in Relation, die so viele Gramm Saccharose pro 100 g Lösung enthält, wie die Gradangabe nennt. Gerade bei Fruchtsäften und anderen zuckerhaltigen Flüssigkeiten werden die Begriffe "Dichte" und "Konzentration" im Sinne der Brix-Skala häufig synonym gebraucht.

Durch die Filtration ergibt sich eine Trennung des Saftflusses in der Anlage in einen Trubsaftabschnitt vor und einen Klarsaftabschnitt hinter dem Filtrationsschritt, wobei die beiden Abschnitte in bekannten Anlagen unter anderem aus der Notwendigkeit einer Trennung von Trubsaft und Klarsaft heraus in getrennten Verdampferanordnungen geführt worden sind. Aus dem oben genannten Grund des hohen Siedepunktverzugs wurde die Beheizung der Anlage in der Regel mit einem thermischen Brüdenverdichter oder einer Direktdampfheizung durchgeführt. Diese beiden Arten der Beheizung sind allerdings sehr energieaufwendig.

Angesichts der ohnehin schon ungünstigen Energiebilanz ist ferner auch im Trubsaftteil in der Regel darauf verzichtet worden, eine Beheizung mittels eines mechanischen Brüdenverdichters durchzuführen, da man sich eine relativ energieeffiziente Aufkonzentration auf lediglich 20° Brix vor der Filtration mit einer erhöhten Komplexität der Anlage erkauft hätte, die durch die relativ geringen Einsparungen im Energieverbrauch durch den Einsatz des mechanischen Brüdenverdichters nicht zu rechtfertigen war.

Es ist angesichts der angesprochenen erheblichen Energiekosten von gattungsgemäßen Anlagen die Aufgabe der vorliegenden Erfindung, die Energieeffizienz solcher Anlagen zu verbessern.

Diese Aufgabe wird durch eine Anlage der gattungsgemäßen Art gelöst, bei welcher die Filter- oder/und Klärvorrichtung in Strömungsrichtung des flüssigen Produkts zwischen zwei der Verdampferstufen der ersten Verdampferanordnung angeordnet ist, wodurch die erste Verdampferanordnung in einen Trubflüssigkeitsteil und einen Klarflüssigkeitsteil unterteilt ist.

Auf diese Weise wird wird in der erfindungsgemäßen Anlage nicht mehr in einer ersten Verdampferanordnung Trubflüssigkeit auf eine vorbestimmte Dichte aufkonzentriert, dann gefiltert bzw. geklärt und dann in einer zweiten Verdampferanordnung auf die gewünschte Endkonzentration weiter aufkonzentriert, sondern in der ersten Verdampferanordnung wird sowohl Trubflüssigkeit als auch Klarflüssigkeit konzentriert, und der Übergang zwischen der ersten Verdampferanordnung und der zweiten Verdampferanordnung wird nicht mehr gemäß des Filtrationsschritts definiert, sondern gemäß der vorbestimmten ersten Konzentration. Entsprechend erfolgt auch die Trennung zwischen Trubflüssigkeitsabschnitt und Klarflüssigkeitsabschnitt der Anlage nicht mehr zwischen den beiden Verdampferanordnungen sondern zwischen zwei Verdampferstufen der ersten Verdampferanordnung, so dass die der Klarflüssigkeitsabschnitt der Anlage die gesamte zweite Verdampferanordnung und den Klarflüssigkeitsteil der ersten Verdampferanordnung umfasst.

Indem die erste Verdampferanordnung mittels des mechanischen Brüdenverdichters beheizt wird und die Klarflüssigkeit nach der Filtration so lange in der ersten Verdampferanordnung weiter aufkonzentriert wird, bis die Beheizung durch den mechanischen Brüdenverdichter aufgrund des zunehmenden Siedepunktverzugs nicht mehr effizient ist, und dann erst in der zweiten Verdampferanordnung auf die vorbestimmte Endkonzentration aufkonzentriert wird, kann ein wesentlich größerer Konzentrierungsbereich durch den sehr energieeffizienten mechanischen Brüdenverdichter abgedeckt werden. Auf diese Weise werden die größeren Anschaffungskosten der Anlage aufgrund der erhöhten Komplexität durch die zwei mit verschiedenen Beheizungsprinzipien betriebenen Beheizungseinrichtungen bereits nach kurzer Laufzeit amortisiert, so dass die Anlage auf ihre Lebenszeit gesehen einen wesentlich preisgünstigeren Betrieb verspricht.

Die zweite Beheizungseinrichtung kann beispielsweise einen thermischem Brüdenverdichter oder eine Direktdampfheizung umfassen, die zwar gegenüber dem in der ersten Beheizungseinrichtung eingesetzten mechanischen Brüdenverdichter energetisch nachteilhaft aber aufgrund des angesprochenen hohen Siedepunktverzugs der hochkonzentrierten Flüssigkeit notwendig sind.

Zur Beheizung der ersten Verdampferanordnung kann in einer erfindungsgemäßen Anlage entweder lediglich der mechanische Brüdenverdichter vorgesehen sein, oder es können noch weitere Wärmequellen eingesetzt werden, beispielsweise Abwärme aus einem anderen Teil der Anlage.

Es versteht sich, dass die Trubflüssigkeit und die Klarflüssigkeit in der ersten Verdampferanordnung hermetisch voneinander getrennt sein müssen, da eine Vermischung der beiden Produkte unbedingt verhindert werden muss. Dies schließt allerdings nicht die Möglichkeit aus, dass die Brüden des Trubflüssigkeitsteils und des Klarflüssigkeitsteils der ersten Verdampferanordnung gemeinsam weiterverwendet werden und es ihnen hierzu gestattet wird, sich zu vermischen. Daher ist der Begriff der "hermetischen Trennung" vorliegend ausschließlich auf die Trubflüssigkeit und die Klarflüssigkeit an sich bezogen.

Die hermetische Trennung der beiden Flüssigkeiten kann in einer Ausführungsform der ersten Verdampferanordnung innerhalb eines einzelnen Verdampferkörpers geschehen, in dem mehrere aus der Mehrzahl von Verdampferstufen der ersten Verdampferanordnung, vorzugsweise alle aus der Mehrzahl von Verdampferstufen der ersten Verdampferanordnung, gemeinsam aufgenommen sind.

Alternativ können auch mehrere Verdampferkörper vorgesehen sein, die dann jeweils einige der Verdampferstufen der ersten Verdampferanordnung aufnehmen, beispielsweise kann ein Verdampferkörper für die Verdampferstufen des Trubflüssigkeitsteils und ein Verdampferkörper für die Verdampferstufen des Klarflüssigkeitsteils vorgesehen sein. Erfindungsgemäß werden die mehreren Verdampferkörper dann sämtlich von der ersten Beheizungseinrichtung mit dem mechanischen Brüdenverdichter gemeinsam beheizt. Hierbei weist die Ausführungsform mit dem einzelnen Verdampferkörper die Vorteile einer erhöhten thermischen Effizienz und eines verringerten Platzbedarfs auf, während die Ausführungsform mit mehreren Verdampferkörpern die hermetische Trennung von Trubflüssigkeit und Klarflüssigkeit erleichtert.

Je nach Art des zu konzentrierenden flüssigen Produkts und abhängig von weiteren Betriebsparametern kann es ferner vorteilhaft sein, wenn auch die zweite Verdampferanordnung ebenfalls eine Mehrzahl von Verdampferstufen umfasst.

In einer Weiterbildung der Erfindung kann der ersten Verdampferanordnung ein einzelner Brüdenabscheider zugeordnet sein, welcher ausgangsseitig mit dem mechanischen Brüdenverdichter verbunden ist. Das bedeutet, dass diesem Brüdenabscheider sowohl der Brüden des Trubflüssigkeitsteils als auch der Brüden des Klarflüssigkeitsteils der ersten Verdampferanordnung zugeführt wird. Durch dieses Vorsehen eines einzelnen Brüdenabscheiders wird der Aufbau der erfindungsgemäßen Anlage insgesamt vereinfacht, wobei der Fachmann unter bestimmten Umständen selbstverständlich auch getrennte Brüdenabscheider für den Trubflüssigkeitsteil und den Klarflüssigkeitsteil vorsehen kann.

Der mechanische Brüdenverdichter kann ferner ausgangsseitig sowohl mit dem Trubflüssigkeitsteil als auch dem Klarflüssigkeitsteil der ersten Verdampferanordnung verbunden sein, wobei wenigstens eine der beiden Verbindungen drosselbar sein kann. Hierdurch kann eine Leistungsregulierung der beiden Teile relativ zueinander erreicht werden, oder es kann beispielsweise auch einer der beiden Teile mit Wasser oder einer Reinigungslösung betrieben werden, während der andere weiterhin Produkt verarbeitet. Da in der Regel der Trubflüssigkeitsteil prozessbedingt häufiger gereinigt werden muss, kann so beispielsweise der Klarflüssigkeitsteil weiter betrieben werden, während der Trubflüssigkeitsteil mit einer Reinigungsflüssigkeit gespült wird.

In einer vorteilhaften Ausführungsform kann wenigstens eine der Verdampferstufen von einer der beiden Verdampferanordnungen einen Fallfilmverdampfer umfassen. Derartige Fallfilmverdampfer werden insbesondere in der Lebensmittelindustrie bevorzugt eingesetzt, da sie einen relativ geringen Temperaturgradienten aufweisen und somit eine besonders schonende Konzentration von flüssigen Lebensmitteln erlauben. Allerdings können selbstverständlich auch andere bekannte Verdampfertypen nach Maßgabe des Fachmanns vorgesehen werden.

Ferner kann der ersten Verdampferanordnung ein Aromasystem zugeordnet sein, das dazu eingerichtet ist, in der ersten Verdampferanordnung verdampfende Aromastoffe abzuscheiden. Auch diese Weiterbildung der Erfindung ist insbesondere für die Lebensmittelindustrie relevant, da sich in zu konzentrierenden flüssigen Lebensmitteln häufig flüchtige Aromastoffe befinden, die für sich selbst ein wertvolles Produkt darstellen und während des Konzentrationsprozesses nicht verloren gehen sollen.

Des Weiteren kann in einer erfindungsgemäßen Anlage in Strömungsrichtung des flüssigen Produkts vor der ersten Verdampferanordnung wenigstens ein Wärmetauscher vorgesehen sein, welcher vorzugsweise dazu eingerichtet sein kann, mit Abwärme aus der zweiten Verdampferanordnung oder/und dem Aromasystem oder/und Kondensat aus der ersten Verdampferanordnung betrieben zu werden. Auf diese Weise wird das flüssige Produkt bereits mit einer erhöhten Temperatur in die erste Verdampferanordnung eingegeben, was dazu führt, dass diese mit einer verminderten Heizleistung betrieben werden kann, wodurch durch Nutzung der Abwärme aus anderen Komponenten der Anlage die Energieeffizienz der Gesamtanlage weiter verbessert wird.

Ferner kann in Strömungsrichtung des flüssigen Produkts vor der ersten Verdampferanordnung eine Sterilisationsanlage vorgesehen werden.

Hierdurch wird das zu konzentrierende Produkt bereits steril in die erste Verdampferanordnung eingegeben.

Des Weiteren kann in einer erfindungsgemäßen Anlage in Strömungsrichtung des flüssigen Produkts nach der zweiten Verdampferanordnung wenigstens eine Kühlvorrichtung vorgesehen sein, die das von der Anlage ausgegebene Endprodukt, also das Konzentrat, auf eine verminderte Temperatur abkühlt und somit besser für eine Weiterverarbeitung, wie beispielsweise eine Abfüllung, vorbereitet. Hierbei ist festzuhalten, dass die von der Kühlvorrichtung entnommene Wärme einen Teil der Abwärme aus der zweiten Verdampferanordnung darstellen kann, die gemäß oben Stehendem in einem Wärmetauscher zur Vorerwärmung des flüssigen Produkts vor seinem Eintritt in die erste Verdampferanordnung verwendet werden kann.

Zuletzt kann die erfindungsgemäße Anlage eine Vakuumpumpe umfassen, welche dazu eingerichtet ist, in wenigstens der ersten Verdampferanordnung einen Unterdruck zu erzeugen, insbesondere in beiden Verdampferanordnungen.

In einem weiteren Aspekt betrifft die vorliegende Erfindung ein Verfahren zum Konzentrieren von flüssigen Produkten, insbesondere Fruchtsäften, und weiter insbesondere Apfelsaft, wobei eine erfindungsgemäße Anlage verwendet wird.

Hierbei kann, sofern es sich bei dem flüssigen Produkt um Fruchtsaft handelt, die vorbestimmte erste Konzentration zwischen 40° Brix und 60° Brix, vorzugsweise etwa 50° Brix, und die Endkonzentration wenigstens 70° Brix betragen. Es ist festzuhalten, dass, wenn man von einer für Fruchtsaft üblichen Anfangskonzentration von etwa 10° Brix ausgeht, der Volumenstrom zwischen dem Eintritt in die erste Verdampferanordnung und dem Austritt aus der ersten Verdampferanordnung beinahe auf ein Zehntel zurückgeht, während in der zweiten Verdampferanordnung dann nur noch eine Verringerung des Volumenstroms um weniger als einen Faktor drei erreicht werden muss. Durch diese Zahlen wird deutlich, dass durch die mechanische Brüdenverdichtung in der ersten Verdampferanordnung in der Tat der größte Teil der Konzentrationsleistung vollbracht wird, während die wesentlich weniger energieeffiziente zweite Verdampferanordnung aufgrund des bereits stark verringerten Volumenstroms im Vergleich mit bekannten Anlagen viel kleiner und mit deutlich verringerter Energieaufnahme ausgelegt werden kann.

Des Weiteren kann erfindungsgemäß der Filter- und/oder Klärvorrichtung Fruchtsaft-Vorkonzentrat mit einer Konzentration von zwischen 15° Brix und 25° Brix, vorzugsweise etwa 20° Brix, zugeführt werden. Dieser Wert hat sich als optimal zur Filtration des bereits vorkonzentrierten Fruchtsafts erwiesen, da er einen Kompromiss zwischen einem verringerten Volumenstrom und einer noch nicht zu hohen Viskosität des Vorkonzentrats darstellt. Es sei erneut darauf hingewiesen, dass sich durch die Vorkonzentration im Trubsaftteil von etwa 10° Brix auf etwa 20° Brix der Volumenstrom bereits auf etwa die Hälfte reduziert hat.

Des Weiteren kann die erste Verdampferanordnung bei Unterdruck, vorzugsweise bei einem Siededruck von 250 mbar bis 1000 mbar, weiter vorzugsweise von etwa 600 mbar, betrieben werden. Auch durch diese Maßnahme kann eine besonders schonende Konzentration des flüssigen Produkts erreicht werden, und ferner wird hierdurch auch der Siedepunkt des flüssigen Produkts herabgesenkt.

Weitere Vorteile und Merkmale der erfindungsgemäßen Anlage werden durch die folgende Beschreibung deutlich, wenn sie zusammen mit den beiliegenden Figuren betrachtet wird, die im Einzelnen zeigen:
Fig. 1 eine erste Ausführungsform einer erfindungsgemäßen Anlage mit einem einzelnen Verdampferkörper in der ersten Verdampferanordnung; und
Fig. 2 eine zweite Ausführungsform einer erfindungsgemäßen Anlage mit zwei Verdampferkörpern in der ersten Verdampferanordnung.

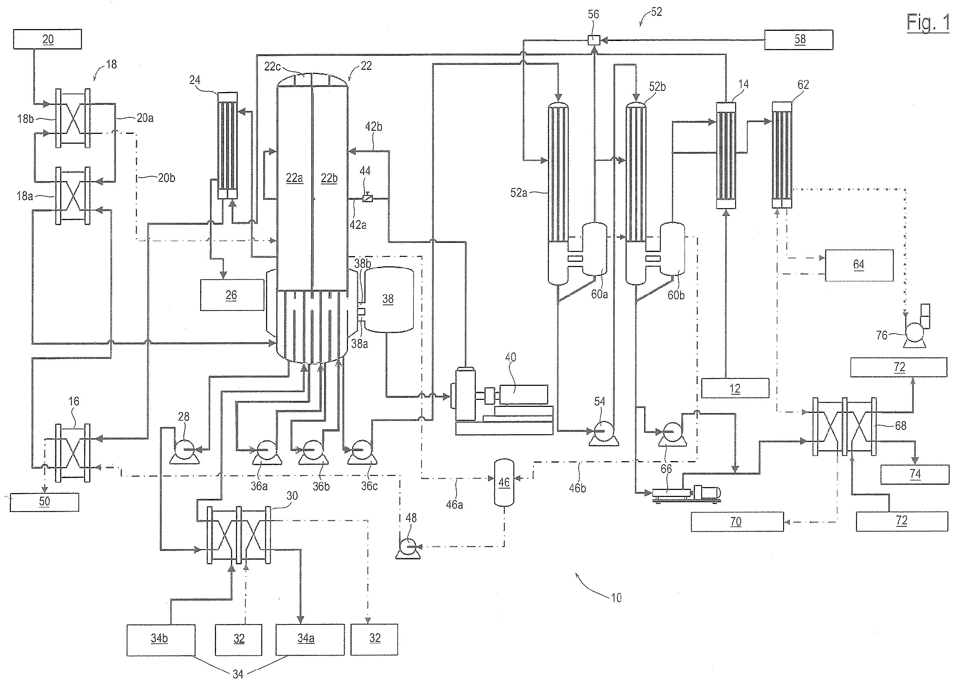

In Fig. 1 zeigt schematisch eine Ausführungsform einer erfindungsgemäßen Anlage zum Konzentrieren von flüssigen Produkten, die ganz allgemein mit dem Bezugszeichen 10 bezeichnet ist und insbesondere zur Konzentrierung von Fruchtsäften eingesetzt werden kann.

Das zu konzentrierende Produkt wird über eine Produktzuführung 12 in die Anlage 10 eingegeben und zunächst zur Vorerwärmung durch einen Vorwärmer 14, einen weiter unten beschriebenen Aromen-Vorkondensator 24 und einen ersten Wärmetauscher 16 geleitet und läuft anschließend durch eine Sterilisationsanlage 18, die wiederum zwei Wärmetauscherstufen 18a und 18b umfasst und von einer ersten Dampfquelle 20 beheizt wird. Hierbei arbeiten die beiden Wärmetauscherstufen 18a und 18b rekuperativ, so dass das in der zweiten Wärmetauscherstufe 18b auf Sterilisationstemperatur erwärmte Produkt in der ersten Wärmetauscherstufe 18a einen Teil seiner Wärme auf das kalte zuströmende Produkt überträgt, wie in Fig. 1 durch den Pfeil 20a angedeutet ist. Das in der zweiten Wärmetauscherstufe 18b entstehende Kondensat wird der weiter unten beschriebenen ersten Verdampferanordnung 22 zugeführt, wie dies durch den Pfeil 20b angedeutet ist.

Das auf diese Weise vorgewärmte Produkt tritt nun in die erste Verdampferanordnung 22 ein, die schematisch in einen Trubflüssigkeitsteil 22a und einen Klarflüssigkeitsteil 22b unterteilt ist, wobei die beiden Teile in einem einzelnen Verdampferkörper 22c aufgenommen sind. Die erste Verdampferanordnung 22 umfasst hierbei mehrere in Fig. 1 lediglich angedeutete Verdampferstufen, wobei ein Teil der Verdampferstufen dem Trubflüssigkeitsteil 22a zugeordnet ist und der restliche Teil der Verdampferstufen dem Klarflüssigkeitsteil 22b zugeordnet ist. Die einzelnen Verdampferstufen sind in der dargestellten Ausführungsform jeweils durch Fallfilmverdampfer gebildet, die durch ihren geringen Temperaturgradienten ein besonders schonendes Konzentrieren von Flüssigkeiten ermöglichen und sich daher insbesondere für das Konzentrieren flüssiger Lebensmittel eignen.

Beim Eindampfen des flüssigen Produkts fallen je nach Ausgangsprodukt nicht nur Brüden an, sondern es können auch leicht flüchtige Aromastoffe aus der Flüssigkeit herausdampfen, die mittels des bereits angesprochenen Aromen-Vorkondensators 24 verflüssigt werden und in einem Aromasystem 26 kondensiert, gesammelt und weiterverwendet oder abgefüllt werden können. Ebenso wie der Vorwärmer 14, der erste Wärmetauscher 16 und die Sterilisationsanlage 18 wird auch der Aromen-Vorkondensator 24 als Vorbeheizungsstufe für das flüssige Produkt verwendet und ist demzufolge als Wärmetauscher ausgelegt.

Beim Durchlauf des flüssigen Produkts durch die Verdampferstufen der ersten Verdampferanordnung 22 nimmt seine Konzentration und damit seine Viskosität stetig zu. Da Flüssigkeiten mit wachsender Viskosität zunehmend schwer zu filtern sind, wird an einer geeigneten Stelle der ersten Verdampferanordnung 22, die somit den Übergang von Trubflüssigkeitsteil 22a zu Klarflüssigkeitsteil 22b darstellt, die vorkonzentrierte Flüssigkeit entnommen und mittels einer Pumpe 28 zunächst einem weiteren Wärmetauscher 30 zugeführt, wo sie mittels von einer Kühlwasserquelle 32 zugeführtem Kühlwasser und der weiter unten erwähnten gefilterten Flüssigkeit abgekühlt wird.

Hiernach wird die abgekühlte vorkonzentrierte Flüssigkeit einer nicht weiter dargestellten Filterstation 34 am Punkt 34a zugeführt. Nach dem Filtrierungsvorgang tritt die nun als Klarflüssigkeit vorliegende Flüssigkeit am Punkt 34b wieder aus der Filterstation 34 aus und durchläuft erneut den Wärmetauscher 30, wo sie wie angesprochen einen Teil der Wärme der der Filterstation zugeführten Flüssigkeit aufnimmt. Anschließend tritt die Klarflüssigkeit dann in den Klarflüssigkeitsteil 22b der ersten Verdampferanordnung 22 ein, wo sie erneut mehrere Verdampferstufen durchläuft. Zwischen diesen Verdampferstufen wird die zunehmend konzentrierte und viskose Klarflüssigkeit durch geeignete Pumpen 36a und 36b gefördert, bis sie schließlich auf eine vorbestimmte erste Konzentration aufkonzentriert ist und mittels einer weitere Pumpe 36c in die weiter unten beschriebene zweite Verdampferanordnung 52 überführt wird.

Der ersten Verdampferanordnung 22 ist ein einzelner Abscheider 38 zugeordnet, dem über jeweilige Verbindungsleitungen 38a und 38b der Brüden sowohl des Trubflüssigkeitsteils 22a als auch des Klarflüssigkeitsteils 22b der ersten Verdampferanordnung 22 zugeführt wird, wobei ein Vermischen der beiden Brüden erlaubt wird. In dem Abscheider 38 wird der nunmehr gemischte Brüden von Produkttröpfchen gereinigt und anschließend dem mechanischen Brüdenverdichter 40 zugeführt, der in Form eines motorbetriebenen Kompressors gebildet ist. Dieser mechanische Brüdenverdichter 40 verdichtet den Brüden und erhöht so seinen Energiegehalt bzw. Druck und Temperatur und führt ihn dann über Brüdenleitungen 42a und 42b jeweils dem Heizraum des Trubflüssigkeitsteils 22a bzw. dem Heizraum des Klarflüssigkeitsteils 22b der ersten Verdampferanordnung 22 zu, um diese zu beheizen.

Hierbei ist die zu dem Trubflüssigkeitsteil 22a führende Brüdenleitung 42a mit einem Drosselventil 44 ausgerüstet, über welches das Verhältnis der jeweils zu dem Trubflüssigkeitsteil 22a und dem Klarflüssigkeitsteil 22b zugeführten Wärmeleistung geregelt werden kann. In der ersten Verdampferanordnung 22 anfallendes Kondensat wird durch eine erste Kondensatleitung 46a zu einem Kondensattank 46 geleitet, von wo es aus über eine Kondensatpumpe 48 in den bereits oben beschriebenen ersten Wärmetauscher 16 eingegeben wird, so dass ein Teil seiner Wärme zur Vorerwärmung des flüssigen Produkts vor dessen Eintritt in die erste Verdampferanordnung 22 verwendet wird. Nach Austritt aus dem Wärmetauscher 16 kann das Kondensat beim Bezugszeichen 50 als Abwasser aus der Anlage abgegeben werden.

Wie bereits oben erwähnt, wird durch die Pumpe 36c die bereits relativ hoch konzentrierte Flüssigkeit von der ersten Verdampferanordnung 22 in die zweite Verdampferanordnung 52 überführt. Diese zweite Verdampferanordnung 52 besteht in der dargestellten Ausführungsform aus zwei Verdampferstufen 52a und 52b, die die Klarflüssigkeit nacheinander durchläuft, wobei sie von einer weiteren Pumpe 54 von der ersten Verdampferstufe 52a in die zweite Verdampferstufe 52b gepumpt wird. Die zweite Verdampferanordnung 52 wird mittels eines thermischen Brüdenverdichters 56 beheizt, der von einer Dampfquelle 58 gespeist wird. In einer Variante könnte die Beheizung der zweiten Verdampferstufe unter Verzicht auf den thermischen Brüdenverdichter 56 auch direkt mittels Dampf von der Dampfquelle 58 erfolgen.

In dem thermischen Brüdenverdichter 56 wird der von der Dampfquelle 58 bereitgestellte Frischdampf mit dem im Abscheider 60a gereinigten Brüden der ersten Verdampferstufe 52a der zweiten Verdampferanordnung 52 gemischt, um dann der ersten Verdampferstufe 52a zu deren Beheizung zugeführt zu werden. Die zweite Verdampferstufe 52b der zweiten Verdampferanordnung 52 wird von dem Überschussbrüden des Abscheiders 60a beheizt, der nicht von dem thermischen Brüdenverdichter 56 angesaugt wird.

Auch die zweite Verdampferstufe 52b der zweiten Verdampferanordnung 52 weist einen Abscheider 60b auf, wobei der hier anfallende Brüden dem bereits oben angesprochenen ersten Vorwärmer 14 zugeführt wird, um frisch in die Anlage eingegebenes flüssiges Produkt vorzuheizen. Des Weiteren wird der aus dem Abscheider 60b ausgegebene Brüden ebenfalls einem weiteren Wärmetauscher 62 zugeführt, in dem er mittels von einer Kühlwasserquelle 64 zugeführtem Kühlwasser kondensiert wird.

In den beiden Verdampferstufen 52a und 52b der zweiten Verdampferanordnung anfallendes Kondensat wird ebenfalls dem Kondensatbehälter 46 zugeführt, wobei zu beachten ist, dass der in der zweiten Verdampferanordnung 52 anfallende Kondensat-Volumenstrom wesentlich kleiner ist als der in der ersten Verdampferanordnung 22 anfallende Kondensat-Volumenstrom.

Nachdem in der zweiten Verdampferstufe 52b der zweiten Verdampferanordnung 52 die zu konzentrierende Flüssigkeit auf ihre vorgesehene Endkonzentration aufkonzentriert worden ist, wird sie mittels eines Pumpensystems 66 einem weiteren Wärmetauscher 68 zugeführt. Da die Flüssigkeit in ihrer Endkonzentration eine sehr hohe Viskosität aufweist, muss bei Auslegung des Pumpensystems 66 darauf geachtet werden, dass dieses für hochviskose Flüssigkeiten geeignet ist.

In dem Wärmetauscher 68 gibt die konzentrierte Flüssigkeit zunächst einen Teil ihrer Wärme an das von der Kühlwasserquelle 64 zugeführte Kühlwasser ab, welches anschließend am Punkt 70 die Anlage verlässt und zur Kühlwasserquelle 64 zurückgeführt wird. Anschließend wird die Flüssigkeit in einer zweiten Stufe des Wärmetauschers 68 mittels eines Kühlmittels, wie beispielsweise Ethylenglykol, das in einem Kühlmittelkreislauf 72 zirkuliert, auf seine endgültige Temperatur abgekühlt und kann beim Bezugszeichen 74 aus der Anlage als Konzentrat entnommen werden. Zuletzt sei noch auf die Vakuumpumpe 76 hingewiesen, die lediglich grob schematisch dargestellt ist, und mit der sichergestellt wird, dass in den Verdampferanordnungen 22 und 52 jeweils ein Unterdruck herrscht, wodurch die jeweiligen Siedetemperaturen des flüssigen Produkts in den Verdampferanordnungen 22 und 52 herabgesetzt werden.

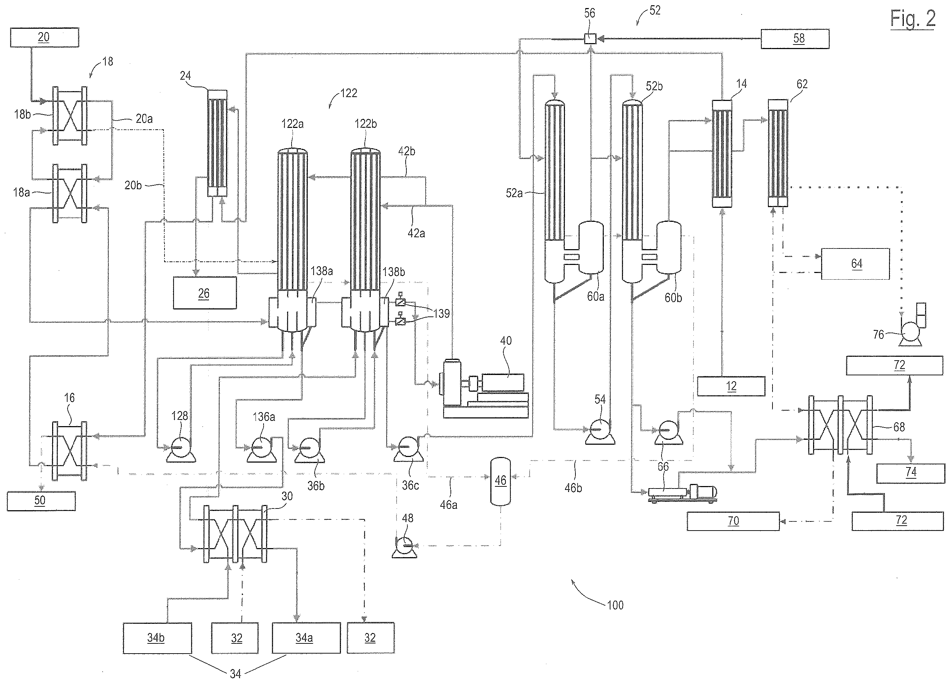

Die in Fig. 2 gezeigte zweite Ausführungsform einer erfindungsgemäßen Anlage ist mit dem Bezugszeichen 100 bezeichnet und unterscheidet sich von der ersten Ausführungsform aus Fig. 1 im Wesentlichen durch den Aufbau ihrer ersten Verdampferanordnung, die in Fig. 2 mit dem Bezugszeichen 122 bezeichnet ist. Sämtliche Komponenten der Anlage 100, die denjenigen der Anlage 10 aus Fig. 1 entsprechen, sind mit gleichen Bezugszeichen bezeichnet und es sei für sie auf die Beschreibung der entsprechenden Komponenten aus Fig. 1 verwiesen.

Die erste Verdampferanordnung 122 der Anlage aus Fig. 2 umfasst zwei getrennte Verdampferkörper 122a und 122b, die in ihrer Funktion im Wesentlichen dem Trubflüssigkeitsteil 22a und dem Klarflüssigkeitsteil 22b der ersten Ausführungsform entsprechen, aber räumlich voneinander getrennt sind. Beide Verdampferkörper 122a und 122b werden gemeinsam von einem einzelnen mechanischen Brüdenverdichter 40, in gleicher Weise wie zu Fig. 1 besprochen, beheizt. Es liegt lediglich eine bauliche Trennung der beiden Verdampferkörper 122a und 122b anstelle eines gemeinsamen Verdampferkörpers 22c vor, was die hermetische Trennung von Trubflüssigkeit und Klarflüssigkeit vereinfacht.

Es sei ferner darauf hingewiesen, dass die beiden Verdampferkörper 122a und 122b demzufolge auch getrennte Brüdenabscheider 138a und 138b aufweisen, deren gereinigte Brüden dann über eine Ventilanordnung 139 dem mechanischen Brüdenverdichter 40 zugeführt werden. Zuletzt sei noch darauf hingewiesen, dass in der in Fig. 2 dargestellten Anlage die Pumpe 128 zum Pumpen der Trubflüssigkeit innerhalb des ersten Verdampferkörpers 122a dient und die Pumpe 136a die vorkonzentriert aus dem ersten Verdampferkörper 122a austretende Trubflüssigkeit durch den Wärmetauscher 30 in gleicher Weise wie oben diskutiert dem Filtersystem 34 zuführt.

## Patentansprüche

1. Anlage zum Konzentrieren eines flüssigen, einen vorbestimmten Stoff, beispielsweise Zucker, enthaltenden Produkts, insbesondere Fruchtsaft, beispielsweise Apfelsaft, umfassend:
- zwei in Reihe angeordnete Verdampferanordnungen (22, 52; 122), wobei
- die erste Verdampferanordnung (22; 122) dazu eingerichtet ist, das flüssige Produkt auf eine vorbestimmte erste Konzentration des vorbestimmten Stoffs aufzukonzentrieren;
- die zweite Verdampferanordnung (52) dazu eingerichtet ist, das flüssige Produkt anschließend auf eine vorbestimmte Endkonzentration des vorbestimmten Stoffs aufzukonzentrieren; und
- wenigstens die erste Verdampferanordnung (22; 122) eine Mehrzahl von Verdampferstufen umfasst,
- zwei Beheizungseinrichtungen (40, 56), von denen eine zur Beheizung der ersten Verdampferanordnung (22; 122) vorgesehen ist, während die andere zur Beheizung der zweiten Verdampferanordnung (52) vorgesehen ist, wobei lediglich die erste Beheizungseinrichtung (40) einen mechanischen Brüdenverdichter (40) umfasst; und
- wenigstens eine Filter- und/oder Klärvorrichtung (34);
**dadurch gekennzeichnet, dass** die Filter- und/oder Klärvorrichtung (34) in Strömungsrichtung des flüssigen Produkts zwischen zwei Verdampferstufen der ersten Verdampferanordnung (22; 122) angeordnet ist, wodurch die erste Verdampferanordnung (22; 122) in einen Trubflüssigkeitsteil (22a; 122a) und einen Klarflüssigkeitsteil (22b; 122b) unterteilt ist.

2. Anlage nach Anspruch 1, **dadurch gekennzeichnet, dass** die zweite Beheizungseinrichtung (56) einen thermischen Brüdenverdichter (56) oder eine Direktdampfheizung umfasst.

3. Anlage nach Anspruch 1 oder 2, **dadurch gekennzeichnet, dass** zur Beheizung der ersten Verdampferanordnung (22; 122) lediglich der mechanische Brüdenverdichter (40) vorgesehen ist.

4. Anlage nach einem der vorhergehenden Ansprüche, **dadurch gekennzeichnet, dass** mehrere aus der Mehrzahl von Verdampferstufen der ersten Verdampferanordnung (22), vorzugsweise alle Verdampferstufen der ersten Verdampferanordnung (22), gemeinsam in einem einzelnen Verdampferkörper (22c) aufgenommen sind.

5. Anlage nach einem der vorhergehenden Ansprüche, **dadurch gekennzeichnet, dass** die zweite Verdampferanordnung (52) ebenfalls eine Mehrzahl von Verdampferstufen (52a, 52b) umfasst.

6. Anlage nach einem der vorhergehenden Ansprüche, **dadurch gekennzeichnet, dass** der ersten Verdampferanordnung (22) ein einzelner Brüdenabscheider (38) zugeordnet ist, welcher ausgangsseitig mit dem mechanischen Brüdenverdichter (40) verbunden ist.

7. Anlage nach einem der vorhergehenden Ansprüche, **dadurch gekennzeichnet, dass** der mechanische Brüdenverdichter (40) ausgangsseitig sowohl mit dem Trubflüssigkeitsteil (22a; 122a) als auch mit dem Klarflüssigkeitsteil (22b; 122b) der ersten Verdampferanordnung (22; 122) verbunden ist, wobei wenigstens eine der beiden Verbindungen (42a, 42b) drosselbar ist.

8. Anlage nach einem der vorhergehenden Ansprüche, **dadurch gekennzeichnet, dass** wenigstens eine der Verdampferstufen einer der beiden Verdampferanordnungen (22, 52; 122) einen Fallfilmverdampfer umfasst.

9. Anlage nach einem der vorhergehenden Ansprüche, **dadurch gekennzeichnet, dass** in Strömungsrichtung des flüssigen Produkts vor der ersten Verdampferanordnung (22; 122) wenigstens ein Wärmetauscher vorgesehen (14, 16, 24) ist, welcher vorzugsweise dazu eingerichtet ist, mit Abwärme aus der zweiten Verdampferanordnung (52) oder/und dem Aromasystem (24, 26) oder/und Kondensat aus der ersten Verdampferanordnung (22; 122) betrieben zu werden.

10. Anlage nach einem der vorhergehenden Ansprüche, **dadurch gekennzeichnet, dass** in Strömungsrichtung des flüssigen Produkts vor der ersten Verdampferanordnung (22; 122) eine Sterilisationsanlage (18) vorgesehen ist.

11. Anlage nach einem der vorhergehenden Ansprüche, **dadurch gekennzeichnet, dass** sie ferner eine Vakuumpumpe (76) umfasst, welche dazu eingerichtet ist, in wenigstens der ersten Verdampferanordnung (22; 122) einen Unterdruck zu erzeugen.

12. Verfahren zum Konzentrieren eines flüssigen, einen vorbestimmten Stoff, beispielsweise Zucker, enthaltenden Produkts, insbesondere Fruchtsaft, beispielsweise Apfelsaft, **dadurch gekennzeichnet, dass** eine Anlage nach einem der Ansprüche 1 bis 10 verwendet wird.

13. Verfahren nach Anspruch 12, **dadurch gekennzeichnet, dass** es sich bei dem flüssigen Produkt um Fruchtsaft handelt, die vorbestimmte erste Konzentration zwischen 40° Brix und 60° Brix, vorzugsweise etwa 50° Brix, und die Endkonzentration wenigstens 70° Brix beträgt.

14. Verfahren nach Anspruch 13, **dadurch gekennzeichnet, dass** der Filter- und/oder Klärvorrichtung Fruchtsaft-Vorkonzentrat mit einer Konzentration von zwischen 15° Brix und 25° Brix, vorzugsweise etwa 20° Brix, zugeführt wird.

15. Verfahren nach einem der Ansprüche 12 bis 14, **dadurch gekennzeichnet, dass** wenigstens die erste Verdampferanordnung (22; 122) bei Unterdruck, vorzugsweise bei einem Siededruck von 250 mbar bis 1000 mbar, weiter vorzugsweise von etwa 600 mbar, betrieben wird.

## Claims

1. Installation for concentrating a liquid product, in particular fruit juice, for example apple juice, that contains a predetermined substance, for example sugar, the installation comprising:
- two evaporator assemblies (22, 52; 122) arranged in series,
- the first evaporator assembly (22; 122) being designed to concentrate the liquid product to a predetermined first concentration of the predetermined substance;
- the second evaporator assembly (52) being designed to subsequently concentrate the liquid product to a predetermined end concentration of the predetermined substance; and
- at least the first evaporator assembly (22; 122) comprising a plurality of evaporator stages,
- two heating devices (40, 56), one of which is provided for heating the first evaporator assembly (22; 122) whereas the other is provided for heating the second evaporator assembly (52), only the first heating device (40) comprising a mechanical vapour compressor (40); and
- at least one filtering and/or clarifying device (34);
**characterised in that** the filtering and/or clarifying device (34) is arranged between two evaporator stages of the first evaporator assembly (22; 122) in the direction of flow of the liquid product, as a result of which the first evaporator assembly (22; 122) is divided into a turbid liquid part (22a; 122a) and a clarified liquid part (22b; 122b).

2. Installation according to claim 1, **characterised in that** the second heating device (56) comprises a thermal vapour compressor (56) or a direct steam heater.

3. Installation according to either claim 1 or claim 2, **characterised in that** only the mechanical vapour compressor (40) is provided for heating the first evaporator assembly (22; 122).

4. Installation according to any of the preceding claims, **characterised in that** several of the plurality of evaporator stages of the first evaporator assembly (22), preferably all of the evaporator stages of the first evaporator assembly (22), are accommodated together in a single evaporator body (22c).

5. Installation according to any of the preceding claims, **characterised in that** the second evaporator assembly (52) likewise comprises a plurality of evaporator stages (52a, 52b).

6. Installation according to any of the preceding claims, **characterised in that** the first evaporator assembly (22) is associated with a single vapour separator (38) that is connected on the output side to the mechanical vapour compressor (40).

7. Installation according to any of the preceding claims, **characterised in that** the mechanical vapour compressor (40) is connected on the output side to both the turbid liquid part (22a; 122a) and to the clarified liquid part (22b; 122b) of the first evaporator assembly (22; 122), it being possible to throttle at least one of the two connections (42a, 42b).

8. Installation according to any of the preceding claims, **characterised in that** at least one of the evaporator stages of one of the two evaporator assemblies (22, 52; 122) comprises a falling film evaporator.

9. Installation according to any of the preceding claims, **characterised in that** at least one heat exchanger (14, 16, 24) is provided upstream of the first evaporator assembly (22; 122) in the direction of flow of the liquid product, which heat exchanger is preferably designed to be operated using waste heat from the second evaporator assembly (52) and/or the aroma system (24, 26) and/or condensate from the first evaporator assembly (22; 122).

10. Installation according to any of the preceding claims, **characterised in that** a sterilisation installation (18) is provided upstream of the first evaporator assembly (22; 122) in the direction of flow of the liquid product.

11. Installation according to any of the preceding claims, **characterised in that** it also comprises a vacuum pump (76) which is designed to generate a vacuum in at least the first evaporator assembly (22; 122).

12. Method for concentrating a liquid product, in particular fruit juice, for example apple juice, that contains a predetermined substance, for example sugar, **characterised in that** an installation according to any of claims 1 to 10 is used.

13. Method according to claim 12, **characterised in that** the liquid product is fruit juice, the predetermined first concentration being between 40° Brix and 60° Brix, preferably approximately 50° Brix, and the end concentration being at least 70° Brix.

14. Method according to claim 13, **characterised in that** the filtering and/or clarifying device is supplied with a fruit juice pre-concentrate having a concentration of between 15° Brix and 25° Brix, preferably approximately 20° Brix.

15. Method according to any of claims 12 to 14, **characterised in that** at least the first evaporator assembly (22; 122) is operated under vacuum, preferably at a boiling pressure of from 250 mbar to 1000 mbar, more preferably of approximately 600 mbar.

## Revendications

1. Installation destinée à concentrer un produit liquide contenant une substance prédéfinie, par exemple du sucre, en particulier du jus de fruits, par exemple du jus de pomme, comprenant :
- deux ensembles d'évaporateur (22, 52 ; 122) disposés en série,
- le premier ensemble d'évaporateur (22 ; 122) étant agencé pour concentrer le produit liquide jusqu'à une première concentration prédéfinie de la substance prédéfinie ;
- le deuxième ensemble d'évaporateur (52) étant agencé pour concentrer ensuite le produit liquide jusqu'à une concentration finale prédéfinie de la substance prédéfinie ;
- au moins le premier ensemble d'évaporateur (22 ; 122) comprenant une pluralité d'étages d'évaporateur,
- deux équipements de chauffage (40,56), dont un est prévu pour le chauffage du premier ensemble d'évaporateur (22 ; 122) tandis que l'autre est prévu pour le chauffage du deuxième ensemble d'évaporateur (52), seul le premier équipement de chauffage (40) comprenant un condenseur de buées (40) mécanique ; et
- au moins un dispositif de filtrage et/ou d'épuration (34) ;
**caractérisé en ce que** le dispositif de filtrage et/ou d'épuration (34) est disposé dans la direction d'écoulement du produit liquide entre deux étages d'évaporateur du premier ensemble d'évaporateur (22; 122), ce qui fait que le premier ensemble d'évaporateur (22; 122) est divisé en une partie de liquide trouble (22a ; 122a) et une partie de liquide clair (22b ; 122b).

2. Installation selon la revendication 1, **caractérisée en ce que** le deuxième équipement de chauffage (56) comprend un condenseur de buée (56) thermique ou un chauffage à vapeur direct.

3. Installation selon la revendication 1 ou 2, **caractérisée en ce que** seul le condenseur de buées (40) mécanique est prévu pour le chauffage du premier ensemble d'évaporateur (22 ; 122).

4. Installation selon l'une des revendications précédentes, **caractérisée en ce que** plusieurs de la pluralité d'étages d'évaporateur du premier ensemble d'évaporateur (22), de préférence tous les étages d'évaporateur du premier ensemble d'évaporateur (22), sont reçus conjointement dans un corps d'évaporateur (22c) unique.

5. Installation selon l'une des revendications précédentes, **caractérisée en ce que** le deuxième ensemble d'évaporateur (52) comprend également une pluralité d'étages d'évaporateur (52a, 52b).

6. Installation selon l'une des revendications précédentes, **caractérisée en ce qu'**un séparateur de buées (38) unique est affecté au premier ensemble d'évaporateur (22) et est raccordé côté sortie au condenseur de buées (40) mécanique.

7. Installation selon l'une des revendications précédentes, **caractérisée en ce que**, côté sortie, le condenseur de buées (40) mécanique est raccordé aussi bien à la partie de liquide trouble (22a ; 122a) qu'à la partie de liquide clair (22b ; 122b) du premier ensemble d'évaporateur (22 ; 122), au moins un des deux raccordements (42a, 42b) pouvant être étranglé.

8. Installation selon l'une des revendications précédentes, **caractérisée en ce qu'**au moins un des étages d'évaporateur d'un des deux ensembles d'évaporateur (22, 52 ; 122) comprend un évaporateur à film tombant.

9. Installation selon l'une des revendications précédentes, **caractérisée en ce que**, en amont du premier ensemble d'évaporateur (22 ; 122) dans la direction d'écoulement du produit liquide, il est prévu au moins un échangeur de chaleur (14, 16, 24) qui est de préférence agencé pour être mis en oeuvre avec la chaleur dégagée à partir du deuxième ensemble d'évaporateur (52) et/ou du système aromatique (24, 26) et/ou avec le condensat en provenance du premier ensemble d'évaporateur (22 ; 122).

10. Installation selon l'une des revendications précédentes, **caractérisée en ce qu'**il est prévu une installation de stérilisation (18) en amont du premier ensemble d'évaporateur (22 ; 122) dans la direction d'écoulement du produit liquide.

11. Installation selon l'une des revendications précédentes, **caractérisée en ce qu'**elle comprend également une pompe à vide (76) qui est agencée pour produire une dépression dans au moins le premier ensemble d'évaporateur (22 ; 122).

12. Procédé destiné à concentrer un produit liquide contenant une substance prédéfinie, par exemple du sucre, en particulier du jus de fruits, par exemple du jus de pomme, **caractérisé en ce qu'**une installation selon l'une des revendications 1 à 10 est utilisée.

13. Procédé selon la revendication 12, **caractérisé en ce que**, concernant le produit liquide, il s'agit de jus de fruits, la première concentration prédéfinie est comprise entre 40° Brix et 60° Brix, de préférence égale à 50 ° Brix, et la concentration finale est d'au moins 70° Brix.

14. Procédé selon la revendication 13, **caractérisé en ce qu'**un pré-concentré de jus de fruits ayant une concentration entre 15° Brix et 25° Brix, de préférence égale à environ 20° Brix, est conduit au dispositif de filtrage et/ou d'épuration.

15. Procédé selon l'une des revendications 12 à 14, **caractérisée en ce qu'**au moins le premier ensemble d'évaporateur (22 ; 122) est mis en oeuvre en présence d'une dépression, de préférence en présence d'une pression d'ébullition de 250 mbar à 1 000 mbar, plus préférablement égale à environ 600 mbar.
